# FASCICULE DE BREVET EUROPEEN

(11) **EP 3 458 791 B1**
(45) Date de publication et mention de la délivrance du brevet: **19.02.2020**
(21) Numéro de dépôt: 17716272.4
(22) Date de dépôt: 12.04.2017
(51) Int. Cl.: F28D 20/00, F02C 6/16

(54) **DISPOSITIF ET PROCEDE DE STOCKAGE ET DE RESTITUTION DE LA CHALEUR COMPRENANT AU MOINS DEUX VOLUMES DE STOCKAGE DE LA CHALEUR CONCENTRIQUES**
SYSTEM UND VERFAHREN ZUR WÄRMESPEICHERUNG UND -FREISETZUNG MIT MINDESTENS ZWEI KONZENTRISCHEN WÄRMESPEICHERVOLUMINA
SYSTEM AND METHOD OF HEAT STORAGE AND RELEASE COMPRISING AT LEAST TWO CONCENTRIC HEAT STORAGE VOLUMES

(30) Priorité: 18.05.2016 FR 1654395
(43) Date de publication de la demande: 27.03.2019
(73) Titulaire: IFP Energies nouvelles, 92852 Rueil-Malmaison (FR)
(72) Inventeur: RICHARD, Florence, 92380 Garches (FR); TEIXEIRA, David, 78290 Croissy sur Seine (FR); DELEAU, Fabrice, 69310 Pierre-Benite (FR)
(74) Mandataire: IFP Energies nouvelles
(86) Numéro de dépôt international: PCT/EP2017/058874
(87) Numéro de publication internationale: WO 2017/198397

(56) Documents cités:
- EP-A1- 2 400 250
- WO-A2-2011/104556
- DE-A1-102008 033 527

## Description

La présente invention concerne le domaine du stockage et de la restitution de chaleur, en particulier pour le stockage de la chaleur dans un système ou un procédé de type AACAES (de l'anglais « Advanced Adiabatic - Compressed Air Energy Storage »). La présente invention concerne, plus particulièrement, un dispositif tel que défini au préambule de la revendication 1, et tel que divulgué par le document EP 2 400 250.

Dans un système de stockage d'énergie par air comprimé (CAES), l'énergie, que l'on souhaite utiliser à un autre moment, est stockée sous forme d'air comprimé. Pour le stockage, une énergie, notamment électrique, entraîne des compresseurs d'air, et pour le déstockage, l'air comprimé entraîne des turbines, qui peuvent être reliées à une génératrice électrique. Le rendement de cette solution n'est pas optimal car une partie de l'énergie de l'air comprimé se retrouve sous forme de chaleur qui n'est pas utilisée. En effet, dans les procédés CAES, on n'utilise que l'énergie mécanique de l'air, c'est-à-dire qu'on rejette toute la chaleur produite lors de la compression. A titre d'exemple, de l'air comprimé à 8 MPa (80 bar) se réchauffe pendant la compression jusqu'à environ 150°C, mais il est refroidi avant le stockage. De plus, le rendement d'un système CAES n'est pas optimal, car ensuite le système nécessite de chauffer l'air stocké pour réaliser la détente de l'air. En effet, si l'air est stocké à 8 MPa (80 bar) et à température ambiante et si l'on désire récupérer l'énergie par une détente, la décompression de l'air suit à nouveau une courbe isentropique, mais cette fois à partir des conditions initiales de stockage (environ 8 MPa et 300 K soit environ 27°C). L'air se refroidit donc jusqu'à des températures non réalistes (83 K soit -191°C). Il est donc nécessaire de le réchauffer, ce qui peut se faire à l'aide d'un brûleur à gaz, ou autre carburant.

Plusieurs variantes existent actuellement à ce système. On peut citer notamment les systèmes et procédés :
- ACAES (de l'anglais « Adiabatic Compressed Air Energy Storage ») dans lequel l'air est stocké à haute température due à la compression. Toutefois, ce type de système nécessite des moyens de stockage spécifique du gaz comprimé, volumineux et coûteux (stockage adiabatique).
- AACAES (de l'anglais « Advanced Adiabatic Compressed Air Energy Storage ») dans lequel l'air est stocké à température ambiante, et la chaleur due à la compression est également stockée, séparément, dans un système de stockage de la chaleur TES (de l'anglais « Thermal Energy Storage »). La chaleur stockée dans le TES est utilisée pour chauffer l'air avant sa détente. Selon certaines conceptions envisagées, la chaleur est stockée dans le système de stockage au moyen de particules solides.

Par ailleurs, de tels systèmes d'échange de chaleur sont utilisés dans d'autres domaines : le stockage de l'énergie solaire, marine, dans les procédés de métallurgie, etc.

Un des critères de conception des dispositifs d'échange, de stockage et de restitution de la chaleur est leur résistance aux hautes pressions et hautes températures des fluides qui échangent la chaleur. Cette résistance aux hautes pressions et aux hautes températures est en général réalisée grâce à des épaisseurs importantes des éléments de la structure de ces systèmes d'échange et de stockage de la chaleur, ce qui implique une masse élevée et un coût important.

De plus, lorsqu'il est nécessaire de stocker de la chaleur provenant de fluides à des températures et/ou pressions distinctes, il est nécessaire d'avoir au moins deux systèmes de stockage de la chaleur TES, ce qui rend le système encombrant (surface au sol nécessaire importante).

Afin de pallier ces inconvénients, la demande de brevet US 2011/0127004 A1 propose plusieurs solutions de conception d'un système de stockage de la chaleur. Une des solutions envisagées consiste à réaliser un système de stockage de chaleur avec deux volumes concentriques de stockage de la chaleur. Cette conception n'est pas optimale en termes d'épaisseurs des parois délimitant les volumes, en effet la paroi extérieure est soumise à une différence de pression élevée, ce qui rend obligatoire l'utilisation d'une paroi externe épaisse. De plus, l'adaptation de cette solution à des hautes pressions supérieures à 100 bars nécessite également d'augmenter les épaisseurs des parois, ce qui implique une masse élevée et un coût important.

La présente invention concerne un dispositif de stockage et de restitution de la chaleur qui comporte au moins deux volumes concentriques de stockage de la chaleur. Les parois délimitant ces volumes de stockage sont configurées de telle sorte que l'épaisseur de la paroi délimitant le volume central de stockage soit supérieure à l'épaisseur de la paroi délimitant le volume périphérique de stockage. Ainsi, il est possible de stocker la chaleur issue d'un fluide à haute pression dans le volume central, et la chaleur issue d'un fluide à pression moins élevée dans le volume périphérique. De cette manière, la différence de pression, à laquelle chaque paroi est soumise est réduite. Cette conception permet également une utilisation du dispositif à des hautes pressions, tout en optimisant la masse et le coût du dispositif de stockage et de restitution de la chaleur.

### Le dispositif et le procédé selon l'invention

L'invention concerne un dispositif de stockage et de restitution de la chaleur comprenant au moins deux volumes de stockage de la chaleur délimités par des parois concentriques, lesdits volumes de stockage de la chaleur comprenant un matériau de stockage de la chaleur. Les épaisseurs desdites parois consécutives délimitant lesdits volumes de stockage de la chaleur sont décroissantes de ladite paroi délimitant ledit volume central de stockage de la chaleur vers ladite paroi délimitant ledit volume périphérique de stockage de la chaleur.

Selon un mode de réalisation de l'invention, ledit dispositif de stockage et de restitution de la chaleur comporte au moins trois volumes concentriques de stockage de la chaleur.

Avantageusement, lesdites parois sont réalisées en métal, notamment en acier.

Conformément à une mise en œuvre, lesdites parois sont formées par assemblage d'au moins une tôle monocouche ou multicouches enroulée, notamment par assemblage par soudage.

De manière avantageuse, lesdites parois sont renforcées par au moins un anneau circonférentiel.

Selon une variante, ladite paroi délimitant le volume de stockage de la chaleur situé en périphérie dudit dispositif de stockage et de restitution de la chaleur est recouverte d'un matériau isolant.

Conformément à un mode de réalisation, ledit matériau de stockage de la chaleur est formé par des billes de béton.

Selon une caractéristique, ledit dispositif de stockage et de restitution de la chaleur comporte au moins une barre et/ou une plaque de renfort disposée entre lesdites parois (2).

Selon une option de réalisation, chaque volume de stockage de la chaleur est formé par une pluralité de modules associés en série et/ou en parallèle.

De plus, l'invention concerne un procédé de stockage et de restitution de la chaleur au moyen d'un dispositif de stockage et de restitution de la chaleur selon l'une des caractéristiques précédentes, dans lequel on réalise les étapes suivantes :
a) on fait circuler un fluide à une première pression P1 dans un premier volume de stockage de chaleur dudit dispositif de stockage et de restitution de la chaleur ; et
b) on fait circuler ledit fluide à une deuxième pression P2 dans un deuxième volume de stockage de la chaleur dudit dispositif de stockage et de restitution de la chaleur, ladite deuxième pression P2 étant supérieure à ladite première pression P1 et ledit deuxième volume de stockage de la chaleur étant situé à l'intérieur dudit premier volume de stockage de la chaleur.

Selon un mode de réalisation, on réitère l'étape b) de manière à faire circuler ledit fluide consécutivement dans chaque volume de stockage de la chaleur dudit dispositif de stockage et de restitution de la chaleur.

En outre, l'invention concerne un système de stockage et de récupération d'énergie par gaz comprimé comprenant au moins deux moyens de compression dudit gaz, au moins un moyen de stockage du gaz comprimé, au moins deux moyens de détente dudit gaz comprimé pour générer une énergie. Ledit système de stockage et de récupération d'énergie comporte un dispositif de stockage et de restitution de la chaleur selon l'une des caractéristiques précédentes, un premier volume de stockage de la chaleur dudit dispositif de stockage et de restitution de la chaleur étant apte à refroidir le gaz comprimé entre lesdits moyens de compression du gaz et/ou apte à chauffer le gaz entre lesdits moyens de détente du gaz, et un deuxième volume de stockage de la chaleur dudit dispositif de stockage et de restitution de la chaleur, intérieur audit premier volume de stockage de la chaleur, étant apte à refroidir le gaz comprimé entre un moyen de compression du gaz et ledit moyen de stockage du gaz comprimé et/ou apte à chauffer le gaz comprimé entre ledit moyen de stockage du gaz comprimé et un premier moyen de détente du gaz.

Avantageusement, ledit système de stockage et de récupération d'énergie par gaz comprimé comporte au moins trois moyens de compression de gaz et au moins trois moyens de détente du gaz, et ledit dispositif de stockage et de restitution de la chaleur comporte au moins trois volumes de stockage de la chaleur.

L'invention concerne également un procédé de stockage et de récupération d'énergie par gaz comprimé. Le procédé comprend les étapes suivantes au moyen d'un système de stockage et de récupération d'énergie selon l'une des caractéristiques précédentes :
a) on comprime un gaz ;
b) on refroidit ledit gaz comprimé dans un premier volume de stockage de la chaleur dudit dispositif de stockage et de restitution de la chaleur;
c) on comprime ledit gaz refroidi ;
d) on refroidit ledit gaz comprimé dans un deuxième volume de stockage de la chaleur dudit dispositif de stockage et de restitution de la chaleur, ledit deuxième volume de stockage de la chaleur étant situé à l'intérieur dudit premier volume de stockage de la chaleur ;
e) on stocke ledit gaz refroidi ;
f) on chauffe ledit gaz stocké dans ledit deuxième volume de stockage de la chaleur ;
g) on détend ledit gaz chauffé pour générer une énergie ;
h) on chauffe ledit gaz détendu dans ledit premier volume de stockage de la chaleur ; et
i) on détend ledit gaz chauffé.

Selon une mise en œuvre, on réitère les étapes c) et d) et/ou h) et i) pour chaque moyen de compression du gaz et/ou pour chaque moyen de détente du gaz.

### Présentation succincte des figures

D'autres caractéristiques et avantages du dispositif et du procédé selon l'invention, apparaîtront à la lecture de la description ci-après d'exemples non limitatifs de réalisations, en se référant aux figures annexées et décrites ci-après.
Les figures 1a et 1b illustrent en vue en coupe un dispositif de stockage et de restitution de la chaleur selon un mode de réalisation de l'invention.
La figure 2 illustre une paroi renforcée par des anneaux circonférentiels selon un mode de réalisation de l'invention.
La figure 3 illustre de manière schématique un système de stockage et de récupération d'énergie par gaz comprimé selon un mode de réalisation de l'invention.
La figure 4 illustre de manière schématique un système de stockage et de récupération d'énergie par gaz comprimé selon un autre mode de réalisation de l'invention.
La figure 5 est un graphique illustrant une comparaison entre les diamètres des parois d'un dispositif de stockage et de restitution de la chaleur selon l'invention et selon l'art antérieur.

### Description détaillée de l'invention

La présente invention concerne un dispositif de stockage et de restitution de la chaleur, appelé dans la suite de la description "dispositif de stockage de la chaleur". Le but du dispositif de stockage de la chaleur est de stocker de la chaleur issue d'un fluide chaud, et de restituer cette chaleur à un fluide froid. Le dispositif de stockage et de restitution de la chaleur selon l'invention comporte au moins deux volumes de stockage de la chaleur délimités par des parois concentriques. Ainsi, le dispositif de stockage de la chaleur comporte au moins un volume de stockage sensiblement cylindrique, appelé également volume central, et au moins un volume de stockage annulaire, disposé autour du volume de stockage cylindrique. Une première paroi est disposée autour du volume cylindrique de stockage de chaleur, et délimite ainsi le volume central de stockage de la chaleur. Une deuxième paroi est disposée autour du volume annulaire. Le volume annulaire est donc délimité par les première et deuxième parois. On appelle volume périphérique de stockage de la chaleur le volume de stockage de la chaleur délimité par la paroi la plus externe. En d'autres termes, le volume périphérique est le volume de stockage de la chaleur le plus extérieur, et n'est entouré par aucun autre volume de stockage de la chaleur (contrairement aux autres volumes de stockage qui sont entourés par au moins un autre volume de stockage). Les parois ont, de préférence, une forme sensiblement cylindrique, et sont de préférence verticales.

Chaque volume de stockage de la chaleur comporte un matériau de stockage de la chaleur. Un matériau de stockage de la chaleur est un matériau apte à échanger de la chaleur avec un fluide. Il est apte à refroidir un fluide chaud, en stockant de la chaleur, et apte à chauffer un fluide froid en restituant de la chaleur. Le matériau de stockage de la chaleur peut être de tout type, par exemple sur la forme d'éléments unitaires, notamment sous forme de billes. Les billes peuvent avoir un diamètre compris entre 1 et 50 mm. Le matériau peut être un matériau à changement de phase (MCP), ou un béton, ou tout matériau analogue. Selon un exemple de réalisation adapté à l'utilisation du dispositif de stockage de chaleur pour un système de type AACAES, le matériau de stockage de la chaleur peut comprendre des billes de béton de diamètre supérieur à 10 mm. Ce matériau de stockage présente l'avantage que, lors des changements de température, les variations de diamètre des différents composants ne posent pas de problème.

Selon l'invention, les épaisseurs des parois consécutives délimitant lesdits volumes de stockage de la chaleur sont décroissantes (non strictement, c'est-à-dire décroissantes ou égales) de la paroi délimitant le volume central de stockage de la chaleur vers la paroi du volume périphérique de stockage de la chaleur. En d'autres termes, la paroi délimitant le volume central a une épaisseur e1, qui est supérieure ou égale à une épaisseur e2 de la paroi délimitant un premier volume annulaire entourant le volume central, qui elle-même est supérieure ou égale à l'épaisseur e3 de la paroi délimitant un deuxième volume annulaire entourant le premier volume annulaire, et ainsi de suite. Si le dispositif de stockage de chaleur comporte N volumes de stockage de chaleur séparées par N parois d'épaisseurs respectives ei (i variant de 1 à N, 1 correspondant à la paroi du volume central et N à la paroi du volume périphérique), on peut écrire l'inégalité suivante : *eN* ≤ *eN* - 1 ≤ ... ≤ *e*3 ≤ *e*2 ≤ *e*1, avec au moins une des inégalités qui est une inégalité stricte. Grâce à cette conception, le volume central de stockage de la chaleur est adapté à recevoir un fluide ayant une pression supérieure aux volumes de stockage de chaleur annulaires, et le volume périphérique de stockage est adapté à recevoir un fluide à une pression inférieure aux autres volumes de stockage de chaleur. Ainsi, cette configuration permet de limiter la différence de pression au niveau de chaque paroi. En effet, comme la paroi du volume central de stockage de la chaleur (destiné à recevoir les pressions les plus élevées) est soumise à une faible différence de pression, cette paroi centrale n'a pas besoin d'être aussi épaisse que lorsque la différence de pression est élevée.

Les différents modes de réalisation décrits ci-dessous peuvent être combinés, pour combiner leurs effets.

De préférence, le dispositif de stockage de la chaleur comporte au moins trois volumes de stockage de chaleur concentriques (donc au moins trois parois). De manière préférée, le dispositif de stockage de la chaleur comporte trois ou quatre volumes de stockage de la chaleur (donc trois ou quatre parois). Cette configuration est particulièrement adaptée aux systèmes de type AACAES qui comportent généralement trois ou quatre étages de compression. En effet, cela permet d'avoir des variations de pression moindres entre deux TES consécutifs, ce qui diminue fortement les épaisseurs des parois. De plus, cette configuration est particulièrement adaptée aux pressions élevées, en limitant la masse et le coût du dispositif de stockage de la chaleur.

Les parois du dispositif de stockage de la chaleur sont destinées à reprendre le poids du matériau de stockage de la chaleur et la différence de pression. De plus, pour certaines applications du dispositif de stockage de la chaleur, les parois peuvent être soumises à des températures de l'ordre de 300°C.

Selon une conception de l'invention, les parois peuvent être en métal, notamment en acier, afin de satisfaire ces critères. Alternativement, d'autres matériaux peuvent être envisagés.

Les parois en métal peuvent être obtenues par assemblage, par exemple par soudage, d'une tôle enroulée. La paroi peut être monocouche (d'une seule épaisseur). Alternativement, la paroi peut être réalisée par assemblage, par exemple par soudage, de tôles roulées en multicouches. Cette réalisation multicouches permet d'avoir des épaisseurs de tôle unitaire de plus faible épaisseur qu'une tôle monocouche, ce qui permet de faciliter le travail de mise en forme. Une variante de cette réalisation multicouches peut être mise en œuvre par assemblage des couches supérieures avec une pré-tension afin de réaliser une paroi multicouches avec frettage sur les couches extérieures, ce qui permet d'optimiser la quantité de matériau nécessaire à la réalisation des parois.

Selon une mise en œuvre, la paroi peut être renforcée, par exemple par au moins un anneau circonférentiel, ce qui permet de réaliser une paroi de plus faible épaisseur et d'ajouter facilement des renforts pour résister aux sollicitations dues à la pression des fluides. L'anneau circonférentiel peut être de préférence en métal, notamment en acier. La paroi peut être renforcée par un nombre d'anneaux circonférentiels compris entre six et vingt, de préférence entre dix et quinze.

Selon une configuration, toutes les parois peuvent être réalisées de la même manière, seule leur épaisseur varie. Alternativement, les parois peuvent être de type différents (monocouche, multicouches, avec ou sans renfort...).

Selon un mode de réalisation de l'invention, la paroi délimitant le volume périphérique de stockage de la chaleur est recouverte d'un matériau isolant. Ainsi, il est possible de maintenir la température à l'intérieur du dispositif de stockage de la chaleur, ce qui favorise le stockage de la chaleur. La couche d'isolant peut être agencée à l'extérieur et/ou à l'intérieur de la paroi délimitant le volume périphérique de stockage. La couche d'isolant ne permet pas de reprendre les différents efforts, par conséquent, la couche d'isolant ne fait pas partie de la paroi : l'épaisseur de la couche d'isolant n'est pas à prendre en compte dans l'épaisseur de la paroi du volume périphérique.

Du fait que les volumes de stockage de la chaleur sont agencés de manière concentrique, il est possible d'utiliser moins de quantité de matériau d'isolation par rapport aux systèmes de l'art antérieur. En effet, les volumes de stockages internes (les plus au centre) sont isolés par ceux de plus gros diamètre, seule la paroi du volume périphérique de stockage de la chaleur doit être isolée contrairement aux dispositifs de stockage de la chaleur classiques.

Selon un mode de réalisation de l'invention, le dispositif de stockage de la chaleur peut comporter au moins une barre de renfort et/ou au moins une plaque de renfort, cette plaque de renfort pouvant être percée. Cette barre et/ou cette plaque de renfort est disposée entre les parois, sensiblement orthogonalement aux parois, de manière à maintenir le positionnement des parois entre elles dans les parties annulaires.

De plus, le dispositif de stockage de la chaleur peut comprendre au moins une grille, disposée entre les parois, cette grille permet de supporter le poids du matériau de stockage de la chaleur.

Selon un mode de réalisation, le dispositif de stockage de la chaleur peut être conçu sous la forme de plusieurs modules en série, et/ou parallèle pour faciliter son installation et son transport en ayant ainsi des éléments de tailles et de poids réduits. Ces différents éléments peuvent être à des pressions un peu différentes, variant par exemple de 70 à 120 bars, afin de s'adapter au fonctionnement du dispositif de stockage de la chaleur qui peut ne pas avoir la même pression sur l'ensemble de sa hauteur.

Conformément à un mode de réalisation, un niveau intermédiaire peut être créé afin de mettre dans une différence de pression intéressante le volume central, sans créer un réservoir supplémentaire utilisé en tant que volume de stockage de la chaleur. Celui-ci pourrait avoir un espace annulaire peu important juste suffisant pour appliquer la pression. Par exemple, pour ce mode de réalisation, on peut prévoir un volume concentrique sans matériau de stockage de la chaleur.

De préférence, le dispositif de stockage de la chaleur est construit de telle sorte que le gradient de température dans les différents volumes soit sensiblement identique.

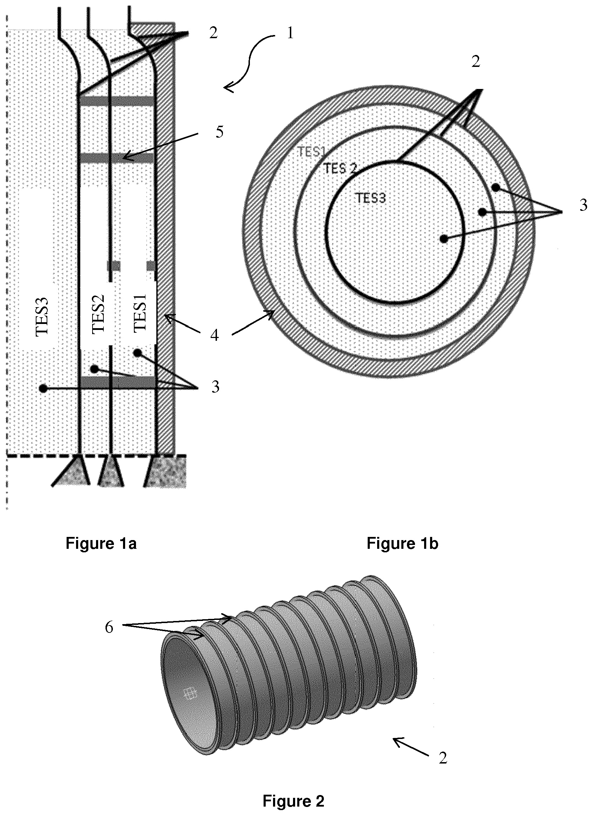

Les figures 1a et 1b illustrent, de manière schématique et non limitative, un dispositif de stockage de la chaleur selon un mode de réalisation de l'invention. La figure 1a est une demie vue en coupe verticale d'un dispositif de stockage de la chaleur. La figure 1b est une vue en coupe horizontale du même dispositif de stockage de la chaleur. Le dispositif de stockage de la chaleur 1 comporte trois volumes de stockage de la chaleur TES1, TES2, TES3. Ces volumes de stockage de la chaleur TES1, TES2, TES3 sont délimitées par des parois cylindriques verticales 2. Sur cette figure, les épaisseurs des parois 2 sont représentées de manière identique, toutefois l'épaisseur de la paroi centrale, est supérieure à l'épaisseur de la paroi intermédiaire, qui elle-même est supérieure à l'épaisseur de la paroi périphérique. Les volumes de stockage de la chaleur TES1, TES2, TES3 comportent un matériau de stockage de la chaleur 3, par exemple des billes de béton. Le dispositif de stockage de la chaleur comporte en outre une couche d'isolant 4 recouvrant la surface extérieure de la paroi périphérique 2. De plus, le dispositif de stockage de la chaleur comporte des barres de renfort 5 destinées à maintenir les parois 2. Ces barres de renfort 5 sont agencées entre les différentes parois 2.

Le dispositif de stockage de la chaleur des figures 1a et 1b peut être modifié en changeant le nombre de volumes de stockage de la chaleur (donc le nombre de parois) qui peut être par exemple de quatre, en ajoutant ou en enlevant des barres de renfort 5, en déplaçant la couche d'isolant 4 à l'intérieur de la paroi périphérique 2, etc.

La figure 2 représente, de manière schématique et non limitative, une paroi selon un mode de réalisation de l'invention. La paroi 2 a une forme cylindrique. Elle peut être réalisée en métal, notamment en acier. La paroi 2 comporte une pluralité, douze selon l'exemple de la figure 2, d'anneaux circonférentiels 6 de renfort. Les anneaux circonférentiels 6 peuvent être réalisés en métal, en particulier en acier.

De plus, la présente invention concerne un procédé de stockage et de restitution de la chaleur au moyen du dispositif de stockage de la chaleur. Pour ce procédé, on fait circuler un fluide dans chaque volume de stockage de la chaleur, en faisant circuler le fluide ayant la pression la plus élevée dans le volume central de stockage de la chaleur, et le fluide ayant la pression la plus basse dans le volume périphérique de stockage de la chaleur. La pression du fluide étant décroissante du centre du dispositif de stockage de la chaleur vers la périphérie du dispositif de stockage de la chaleur. En d'autres termes, pour ce procédé, on peut mettre en œuvre les étapes suivantes :
a) on fait circuler un fluide à une première pression P1 dans un premier volume de stockage de chaleur du dispositif de stockage et de restitution de la chaleur ;
b) on fait circuler le fluide à une deuxième pression P2 dans un deuxième volume de stockage de la chaleur du dispositif de stockage et de restitution de la chaleur, la deuxième pression P2 étant supérieure à la première pression P1 et le deuxième volume de stockage de la chaleur étant situé à l'intérieur du premier volume de stockage de la chaleur ; et
c) éventuellement, on réitère l'étape b) pour chaque volume de stockage de la chaleur, en faisant circuler un fluide dans le volume de stockage de la chaleur situé à l'intérieur du précédent, le fluide ayant une pression supérieure à la pression précédente.

Ces étapes a), b) et c) peuvent être réalisées successivement ou simultanément.

En outre, la présente invention concerne un système de stockage et de récupération d'énergie par gaz comprimé équipé d'un moyen de stockage de la chaleur (par exemple du type AACAES). Dans cette mise en œuvre, le gaz sous pression (souvent de l'air) est stocké froid. Le système de stockage et de récupération d'énergie selon l'invention comporte :
- au moins deux moyens de compression de gaz (ou compresseur) étagés. Chaque moyen de compression de gaz peut être entraîné par un moteur, notamment un moteur électrique ;
- au moins un moyen de stockage du gaz comprimé (appelé également réservoir) par le moyen de compression du gaz. Le moyen de stockage du gaz comprimé peut être un réservoir naturel (par exemple une cavité souterraine) ou non. Le moyen de stockage du gaz comprimé peut être en surface ou en sous-sol. De plus, il peut être formé d'un unique volume ou d'une pluralité de volumes connectés entre eux ou non ;
- au moins deux moyens de détente du gaz étagés (appelé également détendeur ou turbine), permettant de détendre le gaz comprimé et stocké. Chaque moyen de détente du gaz permet de générer une énergie, notamment une énergie électrique au moyen d'un générateur ;
- au moins un dispositif de stockage et de restitution de la chaleur, permettant le stockage de la chaleur issue du gaz comprimé lors de la phase de stockage d'énergie, et permettant la restitution de la chaleur stockée au gaz comprimé lors de la phase de la restitution d'énergie, le système de stockage et de restitution de la chaleur est, de préférence, placé en sortie des moyens de compression et en entrée des moyens de détente.

Selon l'invention, le dispositif de stockage et de restitution de la chaleur est conforme à l'une quelconque des combinaisons des modes de réalisation précédemment décrites : il comporte au moins deux volumes de stockage de la chaleur concentriques. Un premier volume de stockage de la chaleur du dispositif de stockage et de restitution de la chaleur étant apte à refroidir le gaz comprimé entre les moyens de compression du gaz et/ou apte à chauffer le gaz entre les moyens de détente du gaz, et un deuxième volume de stockage de la chaleur du dispositif de stockage et de restitution de la chaleur, intérieur au premier volume de stockage de la chaleur, et étant apte à refroidir le gaz comprimé entre un moyen de compression du gaz et le moyen de stockage du gaz comprimé et/ou apte à chauffer le gaz comprimé entre ledit moyen de stockage du gaz comprimé et un premier moyen de détente du gaz.

Cette configuration permet de diminuer l'épaisseur des parois du dispositif de stockage de la chaleur par rapport à l'art antérieur, en faisant baisser la différence de pression entre l'intérieur et l'extérieur des parois délimitant les volumes de stockage de la chaleur. De plus, cette configuration permet un gain de place au sol en concentrant le dispositif de stockage de la chaleur. En outre, en utilisant un dispositif de stockage de la chaleur qui permet des différences de pression moins importantes, il est possible de réaliser des diamètres plus importants, ce qui rend possible de limiter la hauteur du dispositif de stockage de la chaleur.

On utilise les termes « moyens de compression étagés » (respectivement « moyens de détente étagés »), lorsque une pluralité de moyens de compression (respectivement de détente) sont montés successivement les uns après les autres en série : le gaz comprimé (respectivement détendu) en sortie du premier moyen de compression (respectivement de détente) passe ensuite dans un deuxième moyen de compression (respectivement de détente) et ainsi de suite. On appelle alors un étage de compression ou de détente, un moyen de compression ou de détente de la pluralité de moyens de compression ou de détente étagés. Avantageusement, lorsque le système comporte une pluralité d'étages de compression et/ou de détente, un échange de chaleur (permis grâce au dispositif de stockage de la chaleur) est mis en œuvre entre chaque étage de compression et/ou de détente. Ainsi, le gaz comprimé est refroidi entre chaque compression, ce qui permet d'optimiser le rendement de la compression suivante, et le gaz détendu est chauffé entre chaque détente, ce qui permet d'optimiser le rendement de la détente suivante. Le nombre d'étages de compression et le nombre d'étages de détente peuvent être compris entre deux et dix, de préférence entre trois et cinq. De préférence, le nombre d'étages de compression est identique au nombre d'étages de détente et au nombre de volumes de stockage de la chaleur du dispositif de stockage de la chaleur. Une configuration préférée du système de stockage et de récupération d'énergie par gaz comprimé comporte trois ou quatre étages de compression, autant d'étages de détente et autant de volumes de stockage de la chaleur. Cette configuration permet notamment un bon compromis entre l'énergie récupérée et la masse et le coût du dispositif de stockage de la chaleur (épaisseurs des parois réduites).

Selon une variante de réalisation de l'invention, les moyens de compression peuvent être réversibles, c'est-à-dire qu'ils peuvent fonctionner à la fois pour la compression et pour la détente. Ainsi, il est possible de limiter le nombre de dispositifs utilisés dans le système selon l'invention, ce qui permet un gain en poids et en volume du système selon l'invention.

Le système selon l'invention est adapté à tout type de gaz, notamment pour l'air. Dans ce cas, l'air en entrée utilisé pour la compression peut être prélevé de l'air ambiant, et l'air en sortie après la détente peut être relâché dans l'air ambiant. Dans la suite de la description, seule la variante de réalisation avec de l'air comprimé, et son application AACAES seront décrites. Toutefois, le système et le procédé de stockage d'énergie par gaz comprimé sont valables pour tout autre gaz.

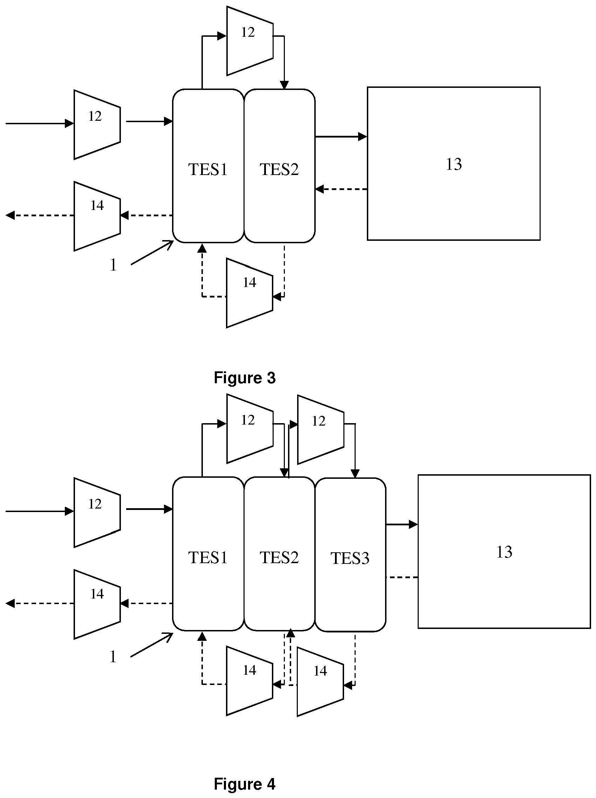

La figure 3 illustre un exemple de réalisation non limitatif d'un système AACAES selon l'invention. Sur cette figure, les flèches en trait continu illustrent la circulation du gaz lors des étapes de compression (stockage d'énergie), et les flèches en pointillés illustrent la circulation du gaz lors des étapes de détente (restitution d'énergie). Cette figure illustre un système AACAES comprenant deux étages de compression 12, deux étages de détente 14 et un dispositif de stockage et de restitution de la chaleur 1 comprenant deux volumes de stockage de la chaleur TES1 et TES2. Sur cette figure (pour des raisons de simplification), les deux volumes de stockage de la chaleur TES1 et TES2 sont représentés côté à côté, mais le volume de stockage de la chaleur TES2 est agencé au sein du volume de stockage de la chaleur TES1, de plus, l'emplacement des différents éléments du système AACEAS est purement illustratif. Le système comporte un réservoir de stockage 13 du gaz comprimé. Le premier volume de stockage de la chaleur TES1 est intercalé entre les deux étages de compression 12 et entre les deux étages de détente 14. Le deuxième volume de stockage de la chaleur TES2 du dispositif de stockage et de restitution de la chaleur 1 est intercalé entre l'étage de compression/détente 12 ou 14 et le réservoir de stockage 13 du gaz comprimé. Classiquement, en phase de stockage d'énergie (compression), l'air est d'abord comprimé dans un premier compresseur 12, puis refroidi dans le volume de stockage de la chaleur TES1. L'air refroidi est ensuite comprimé une deuxième fois par un deuxième étage de compression 12. Le gaz comprimé est refroidi une deuxième fois dans le deuxième volume de stockage de la chaleur TES2. Le gaz comprimé et refroidi est stocké dans le réservoir 13. Le matériau de stockage de la chaleur du système de stockage de la chaleur 1 est chaud suite au refroidissement du gaz comprimé dans la phase de compression. Lors de la récupération de l'énergie (détente), le gaz comprimé stocké est d'abord chauffé dans le deuxième volume de stockage de la chaleur TES2. Ensuite, de manière classique, le gaz passe au travers d'un étage de détente 14. Le gaz détendu est chauffé une deuxième fois dans le premier volume de stockage de la chaleur TES1. En sortie de ce premier volume de stockage de la chaleur TES1 le gaz passe au travers un deuxième étage de détente 14.

La figure 4 illustre un deuxième exemple de réalisation non limitatif d'un système AACAES selon l'invention. Sur cette figure, les flèches en trait continu illustrent la circulation du gaz lors des étapes de compression (stockage d'énergie), et les flèches en pointillés illustrent la circulation du gaz lors des étapes de détente (restitution d'énergie). Cette figure illustre un système AACAES comprenant trois étages de compression 12, trois étages de détente 14 et un dispositif de stockage et de restitution de la chaleur 1 comprenant trois volumes de stockage de la chaleur TES1, TES2 et TES3. Sur cette figure (pour des raisons de simplification), les trois volumes de stockage de la chaleur TES1, TES2 et TES3 sont représentés côté à côté, mais le volume de stockage de la chaleur TES3 est agencé au sein du volume de stockage de la chaleur TES2, lui-même agencé au sein du volume de stockage de la chaleur TES1, de plus, l'emplacement des différents éléments du système AACAES est purement illustratif. Le système comporte un réservoir de stockage 13 du gaz comprimé. Le premier et le deuxième volumes de stockage de la chaleur TES1 et TES2 sont intercalés entre deux étages de compression 12 et entre deux étages de détente 14. Le troisième volume de stockage de la chaleur TES3 du dispositif de stockage et de restitution de la chaleur 1 est intercalé entre l'étage de compression/détente 12 ou 14 et le réservoir de stockage 13 du gaz comprimé. Classiquement, en phase de stockage d'énergie (compression), l'air est d'abord comprimé dans un premier étage de compression 12, puis refroidi dans le volume de stockage de la chaleur TES1. L'air refroidi est ensuite comprimé une deuxième fois par un deuxième étage de compression 12. Le gaz comprimé est refroidi une deuxième fois dans le deuxième volume de stockage de la chaleur TES2. L'air refroidi est ensuite comprimé une troisième fois par un troisième étage de compression 12. Le gaz comprimé est refroidi une troisième fois dans le troisième volume de stockage de la chaleur TES3. Le gaz comprimé et refroidi est stocké dans le réservoir 13. Le matériau de stockage de la chaleur du système de stockage de la chaleur 1 est chaud suite au refroidissement du gaz comprimé dans la phase de compression. Lors de la récupération de l'énergie (détente), le gaz comprimé stocké est d'abord chauffé dans le troisième volume de stockage de la chaleur TES3. Ensuite, le gaz passe au travers d'un étage de détente 14. Le gaz détendu est chauffé une deuxième fois dans le deuxième volume de stockage de la chaleur TES2. Ensuite, de manière classique, le gaz passe au travers d'un étage de détente 14. Le gaz détendu est chauffé une troisième fois dans le premier volume de stockage de la chaleur TES1. En sortie de ce premier volume de stockage de la chaleur TES1 le gaz passe au travers un troisième étage de détente 14.

Le système de stockage et de récupération d'énergie par gaz comprimé selon l'invention n'est pas limité aux exemples des figures 3 ou 4. D'autres configurations peuvent être envisagées : un nombre différent d'étages de compression et/ou de détente, l'utilisation de moyens réversibles assurant la compression et la détente, etc.

Alternativement, le système de stockage et de récupération de la chaleur selon l'invention peut être utilisé pour tout type d'utilisation nécessitant le stockage de la chaleur, notamment pour le stockage d'énergie solaire, éolienne, ou pour tout type d'industrie par exemple la métallurgie, etc.

La présente invention concerne également un procédé de stockage et de récupération d'énergie par gaz comprimé, dans lequel on réalise les étapes suivantes :
a) on comprime un gaz, notamment au moyen d'un compresseur ;
b) on refroidit le gaz comprimé par échange de chaleur, dans un premier volume de stockage de la chaleur du dispositif de stockage et de restitution de la chaleur selon l'invention ;
c) on comprime le gaz refroidi, notamment au moyen d'un deuxième compresseur ;
d) on refroidit le gaz comprimé par échange de chaleur dans un deuxième volume de stockage de la chaleur du dispositif de stockage et de restitution de la chaleur, le deuxième volume étant situé à l'intérieur du premier volume de stockage de la chaleur ;
e) on stocke le gaz comprimé refroidi, notamment par un moyen de stockage de gaz comprimé ;
f) on chauffe le gaz comprimé stocké, par échange de chaleur, dans le deuxième volume de stockage de la chaleur du dispositif de stockage et de restitution de la chaleur selon l'invention ;
g) on détend le gaz comprimé chauffé pour générer une énergie, par exemple au moyen d'une turbine pour générer une énergie électrique ;
h) on chauffe le gaz comprimé détendu, par échange de chaleur, dans le premier volume de stockage de la chaleur du dispositif de stockage et de restitution de la chaleur ; et
i) on détend le gaz comprimé chauffé pour générer une énergie, par exemple au moyen d'une turbine pour générer une énergie électrique.

Conformément à une mise en œuvre de l'invention, on réitère les étapes c) et d) et/ou h) et i) pour chaque étage de compression et/ou de détente.

Le procédé de stockage et de récupération d'énergie par gaz comprimé peut être réalisé avec l'une des variantes de réalisation du dispositif de stockage et de restitution de la chaleur décrite précédemment, ou l'une quelconque des combinaisons des variantes précédemment décrites.

L'étape a) concerne la compression d'un gaz, par exemple de l'air. Il peut s'agit notamment d'air prélevé dans le milieu ambiant.

Les étapes b) et d) permettent de refroidir le gaz comprimé après chaque étape de compression, ce qui permet d'optimiser le rendement de la compression suivante et/ou le stockage d'énergie. Le dispositif de stockage de la chaleur permet, lors du stockage du gaz comprimé (compression), de récupérer un maximum de chaleur issue de la compression du gaz en sortie des compresseurs et de diminuer la température du gaz avant le passage à la compression suivante ou avant le stockage du gaz comprimé. Par exemple, le gaz comprimé peut passer d'une température supérieure à 150 °C, par exemple environ 190 °C à une température inférieure à 80 °C, par exemple environ 50 °C.

L'étape e) peut être réalisée au sein d'un moyen de stockage du gaz comprimé, qui peut être un réservoir naturel ou non (par exemple une cavité souterraine). Le moyen de stockage du gaz comprimé peut être en surface ou en sous-sol. De plus, il peut être formé d'un unique volume ou d'une pluralité de volumes connectés entre eux ou non. Lors du stockage, on ferme le moyen de stockage du gaz comprimé.

Le gaz comprimé est stocké jusqu'au moment où on souhaite récupérer l'énergie stockée. L'étape f) et les suivantes sont réalisées au moment où on souhaite récupérer l'énergie stockée.

Les étapes f) et h) permettent de chauffer l'air comprimé avant chaque détente, ce qui permet d'optimiser le rendement de la détente suivante. Le dispositif de stockage de la chaleur permet, lors de la restitution de l'énergie, de restituer un maximum de chaleur stockée en augmentant la température du gaz avant le passage à la détente suivante. Par exemple, le gaz peut passer d'une température inférieure à 80 °C, par exemple environ 50 °C, à une température supérieure à 150 °C, par exemple environ 180 °C.

Lors des étapes g) et i), le gaz comprimé est détendu. La détente du gaz comprimé permet de générer une énergie. Cette détente peut être réalisée au moyen d'une turbine qui génère une énergie électrique. Si le gaz est de l'air, l'air détendu peut être évacué dans le milieu ambiant.

Le procédé et le système de stockage et récupération d'énergie par gaz comprimé selon l'invention peuvent être utilisés pour le stockage d'une énergie intermittente, telle que l'énergie éolienne ou solaire, afin de pouvoir utiliser cette énergie au moment désiré.

### Exemple illustratif

On décrit un exemple de réalisation (non limitatif) d'un dispositif de stockage de la chaleur constitué de quatre volumes de stockage de la chaleur en utilisant des dimensionnements issus de l'industrie pétrolière moins conservatifs que le Codap (Code de construction des appareils à pression non soumis à l'action de la flamme) :
- Une paroi en acier de diamètre interne de 3.5m et d'une épaisseur de l'ordre 100mm constitue le volume central (noté TES4) de stockage de la chaleur qui est à la pression la plus élevée de 125.6 bars.
- Une seconde paroi en acier de diamètre interne 5.8m et d'épaisseur de l'ordre de 70mm, correspond à un premier volume annulaire de stockage de la chaleur de pression interne 62.5 bars (noté TES3).
- Une troisième paroi en acier de diamètre interne de 6.28m et d'une épaisseur de l'ordre de 60mm correspond à un deuxième volume annulaire de stockage de la chaleur de pression interne 30.8 bars (noté TES2).
- La dernière paroi en acier de diamètre interne 7.29 m et d'une épaisseur de l'ordre de 14 mm correspond au volume périphérique de stockage de la chaleur (noté TES1).
- Une couche d'isolant est utilisée pour recouvrir la dernière paroi en acier.

Chaque volume de stockage de la chaleur contient un matériau de stockage avec un volume interne de 478.5 m³ sous forme d'un cylindre pour le volume central de stockage de la chaleur et d'annulaire pour les volumes de stockage de la chaleur suivants. Cet ensemble permet de contenir 574 tonnes de matériau de stockage. Pour avoir le volume nécessaire, il faut une hauteur de près de 50 m. Ceci peut être réalisé avec trois modules d'environ 17m de haut installés en série.

Pour la réalisation de chaque volume de stockage de la chaleur imbriqué, il faut une quantité d'acier différente. Les valeurs pour chaque TES sont données dans le tableau 1 :

**Tableau 1 - masses d'acier pour l'exemple de conception du dispositif de stockage de la chaleur**

| | TES 1 | TES 2 | TES 3 | TES 4 |
|---|---|---|---|---|
| masse d'acier (tonnes) | 125 | 474 | 404 | 405 |

Pour l'installation sur site, les différents cylindres en acier peuvent être partitionnés en différents éléments transportables par camion, puis acheminés sur le site pour être assemblés et soudés. Pour le TES 4 soumis à la plus forte pression et d'épaisseur conséquente, une attention particulière aux soudures devra être apportée. Au fur et à mesure de l'assemblage, le matériau de stockage pourra être ajouté, et des barres de maintien peuvent être installées.

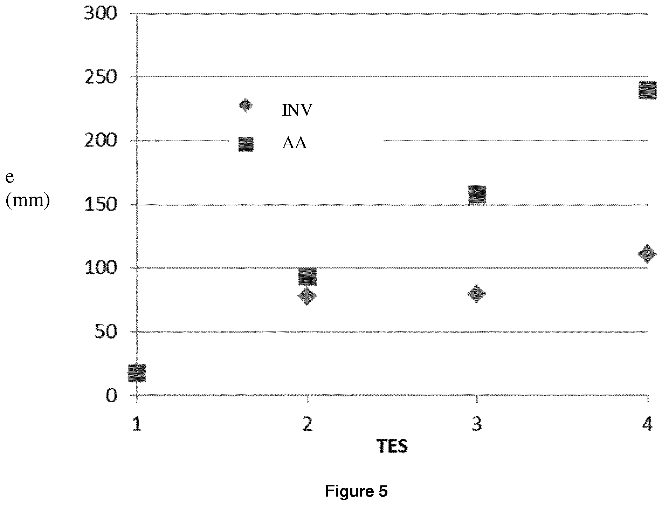

Selon un deuxième exemple, afin de montrer l'intérêt du système selon l'invention, notamment en terme d'épaisseur d'acier utilisée, on compare un dispositif de stockage de la chaleur selon l'invention INV avec quatre volumes de stockage de la chaleur concentriques, avec un dispositif de stockage de la chaleur selon l'art antérieur AA formé de quatre colonnes de stockage de chaleur distinctes. Ces deux dispositifs sont soumis aux mêmes sollicitations (températures, pressions de fluide). Le tableau 2 et la figure 5 illustrent les différences entre le dispositif selon l'invention INV et selon l'art antérieur AA. La figure 5 illustre l'épaisseur e (en mm) de la paroi d'acier pour chaque volume de stockage de la chaleur TES1, TES2, TES3, TES4 (TES1 étant le volume périphérique et TES4 étant le volume central).

**Tableau 2 - exemple comparatif**

| | | TES 1 | TES 2 | TES 3 | TES 4 |
|---|---|---|---|---|---|
| Différence de pression vue par la paroi acier (bar) | AA | 5 | 30 | 61.5 | 124.6 |
| | INV | 5 | 25 | 31.5 | 63.1 |
| Epaisseur d'acier avec le CODAP (mm) | AA | 18 | 94 | 158 | 240 |
| | INV | 18 | 78 | 80 | 111 |

On remarque que le dispositif selon l'invention permet de réduire fortement la différence de pression vue par les parois en acier. De plus, on remarque que l'invention permet de limiter les épaisseurs des parois en acier, ce qui permet de limiter la masse et le coût du dispositif de stockage de la chaleur.

## Revendications

1. Dispositif de stockage et de restitution de la chaleur comprenant au moins deux volumes de stockage de la chaleur (TES1, TES2, TES3) délimités par des parois (2) concentriques, lesdits volumes de stockage de la chaleur (TES1, TES2, TES3) comprenant un matériau de stockage de la chaleur (3), **caractérisé en ce que** les épaisseurs desdites parois (2) consécutives délimitant lesdits volumes de stockage de la chaleur (TES1, TES2, TES3) sont décroissantes de ladite paroi (2) délimitant ledit volume central de stockage de la chaleur (TES3) vers ladite paroi (2) délimitant ledit volume périphérique de stockage de la chaleur (TES1).

2. Dispositif selon la revendication 1, dans lequel ledit dispositif de stockage et de restitution de la chaleur (1) comporte au moins trois volumes concentriques de stockage de la chaleur (TES1, TES2, TES3).

3. Dispositif selon l'une des revendications précédentes, dans lequel lesdites parois sont réalisées en métal, notamment en acier.

4. Dispositif selon la revendication 3, dans lequel lesdites parois sont formées par assemblage d'au moins une tôle monocouche ou multicouches enroulée, notamment par assemblage par soudage.

5. Dispositif selon l'une des revendications 3 ou 4, dans lequel lesdites parois sont renforcées par au moins un anneau circonférentiel (6).

6. Dispositif selon l'une des revendications précédentes, dans lequel ladite paroi (2) délimitant le volume de stockage de la chaleur situé en périphérie (TES1) dudit dispositif de stockage et de restitution de la chaleur (1) est recouverte d'un matériau isolant (4).

7. Dispositif selon l'une des revendications précédentes, dans lequel ledit matériau de stockage de la chaleur (3) est formé par des billes de béton.

8. Dispositif selon l'une des revendications précédentes, dans lequel ledit dispositif de stockage et de restitution de la chaleur (1) comporte au moins une barre et/ou une plaque de renfort (5) disposée entre lesdites parois (2).

9. Dispositif selon l'une des revendications précédentes, dans lequel chaque volume de stockage de la chaleur (TES1, TES2, TES3) est formé par une pluralité de modules associés en série et/ou en parallèle.

10. Procédé de stockage et de restitution de la chaleur au moyen d'un dispositif de stockage et de restitution de la chaleur (1) selon l'une des revendications précédentes, dans lequel on réalise les étapes suivantes :
a) on fait circuler un fluide à une première pression P1 dans un premier volume de stockage de chaleur dudit dispositif de stockage et de restitution de la chaleur ; et
b) on fait circuler ledit fluide à une deuxième pression P2 dans un deuxième volume de stockage de la chaleur dudit dispositif de stockage et de restitution de la chaleur, ladite deuxième pression P2 étant supérieure à ladite première pression P1 et ledit deuxième volume de stockage de la chaleur étant situé à l'intérieur dudit premier volume de stockage de la chaleur.

11. Procédé selon la revendication 10, dans lequel on réitère l'étape b) de manière à faire circuler ledit fluide consécutivement dans chaque volume de stockage de la chaleur (TES1, TES2, TES3) dudit dispositif de stockage et de restitution de la chaleur.

12. Système de stockage et de récupération d'énergie par gaz comprimé comprenant au moins deux moyens de compression dudit gaz (12), au moins un moyen de stockage du gaz comprimé (13), au moins deux moyens de détente (14) dudit gaz comprimé pour générer une énergie, **caractérisé en ce que** ledit système de stockage et de récupération d'énergie comporte un dispositif de stockage et de restitution de la chaleur (1) selon l'une des revendications 1 à 9, un premier volume de stockage de la chaleur (TES1) dudit dispositif de stockage et de restitution de la chaleur étant apte à refroidir le gaz comprimé entre lesdits moyens de compression du gaz (12) et/ou apte à chauffer le gaz entre lesdits moyens de détente du gaz (14), et un deuxième volume de stockage de la chaleur (TES2) dudit dispositif de stockage et de restitution de la chaleur (1), intérieur audit premier volume de stockage de la chaleur (TES1), étant apte à refroidir le gaz comprimé entre un moyen de compression du gaz (12) et ledit moyen de stockage du gaz comprimé (13) et/ou apte à chauffer le gaz comprimé entre ledit moyen de stockage du gaz comprimé (13) et un premier moyen de détente du gaz (14).

13. Système selon la revendication 12, dans lequel ledit système de stockage et de récupération d'énergie par gaz comprimé comporte au moins trois moyens de compression de gaz (12) et au moins trois moyens de détente du gaz (14), et ledit dispositif de stockage et de restitution de la chaleur (1) comporte au moins trois volumes de stockage de la chaleur (TES1, TES2, TES3).

14. Procédé de stockage et de récupération d'énergie par gaz comprimé, **caractérisé en ce qu'**il comprend les étapes suivantes au moyen d'un système de stockage et de récupération d'énergie selon l'une des revendications 12 ou 13 :
a) on comprime un gaz ;
b) on refroidit ledit gaz comprimé dans un premier volume de stockage (TES1) de la chaleur dudit dispositif de stockage et de restitution de la chaleur (1) ;
c) on comprime ledit gaz refroidi ;
d) on refroidit ledit gaz comprimé dans un deuxième volume de stockage (TES2) de la chaleur dudit dispositif de stockage et de restitution de la chaleur (1), ledit deuxième volume de stockage (TES2) de la chaleur étant situé à l'intérieur dudit premier volume de stockage de la chaleur (TES1) ;
e) on stocke ledit gaz refroidi ;
f) on chauffe ledit gaz stocké dans ledit deuxième volume de stockage de la chaleur (TES2) ;
g) on détend ledit gaz chauffé pour générer une énergie ;
h) on chauffe ledit gaz détendu dans ledit premier volume de stockage de la chaleur (TES1) ; et
i) on détend ledit gaz chauffé.

15. Procédé selon la revendication 14, dans lequel on réitère les étapes c) et d) et/ou h) et i) pour chaque moyen de compression du gaz (12) et/ou pour chaque moyen de détente du gaz (14).

## Patentansprüche

1. Vorrichtung zur Speicherung und zur Rückgewinnung von Wärme, umfassend mindestens zwei Volumen (TES1, TES2, TES3) zur Speicherung der Wärme, die von konzentrischen Wänden (2) begrenzt werden, wobei die Volumen (TES1, TES2, TES3) zur Speicherung der Wärme ein Material (3) zur Speicherung der Wärme umfassen, **dadurch gekennzeichnet, dass** die Dicken der konsekutiven Wände (2), welche die Volumen (TES1, TES2, TES3) zur Speicherung der Wärme begrenzen, von der Wand (2), die das zentrale Volumen (TES3) zur Speicherung der Wärme begrenzt, zu der Wand (2), die das periphere Volumen (TES1) zur Speicherung der Wärme begrenzt, abnehmen.

2. Vorrichtung nach Anspruch 1, wobei die Vorrichtung (1) zur Speicherung und Rückgewinnung von Wärme mindestens drei konzentrische Volumen (TES1, TES2, TES3) zur Speicherung der Wärme umfassen.

3. Vorrichtung nach einem der vorhergehenden Ansprüche, wobei die Wände aus Metall, insbesondere aus Stahl, hergestellt sind.

4. Vorrichtung nach Anspruch 3, wobei die Wände durch das Zusammenfügen mindestens eines zusammengerollten einschichtigen oder mehrschichtigen Blechs, insbesondere durch Zusammenfügen mittels Schweißen, gebildet sind.

5. Vorrichtung nach einem der Ansprüche 3 oder 4, wobei die Wände durch mindestens einen Umfangsring (6) verstärkt sind.

6. Vorrichtung nach einem der vorhergehenden Ansprüche, wobei die Wand (2), die das am Umfang angeordnete Volumen (TES1) zur Speicherung der Wärme der Vorrichtung (1) zur Speicherung und Rückgewinnung von Wärme begrenzt, mit einem Isoliermaterial (4) bedeckt ist.

7. Vorrichtung nach einem der vorhergehenden Ansprüche, wobei das Material (3) zur Speicherung der Wärme aus Betonkügelchen gebildet ist.

8. Vorrichtung nach einem der vorhergehenden Ansprüche, wobei die Vorrichtung (1) zur Speicherung und Rückgewinnung von Wärme mindestens eine Stange und/oder eine Platte (5) zur Verstärkung umfasst, die zwischen den Wänden (2) angeordnet ist.

9. Vorrichtung nach einem der vorhergehenden Ansprüche, wobei jedes Volumen (TES1, TES2, TES3) zur Speicherung der Wärme aus einer Vielzahl von Modulen gebildet ist, die in Serie und/oder parallel assoziiert sind.

10. Verfahren zur Speicherung und zur Rückgewinnung von Wärme mittels einer Vorrichtung (1) zur Speicherung und zur Rückgewinnung von Wärme nach einem der vorhergehenden Ansprüche, wobei die folgenden Schritte durchgeführt werden:
a) ein Fluid wird bei einem ersten Druck P1 in einem ersten Volumen zur Speicherung der Wärme der Vorrichtung zur Speicherung und zur Rückgewinnung von Wärme zirkulieren gelassen; und
b) das Fluid wird bei einem zweiten Druck P2 in einem zweiten Volumen zur Speicherung der Wärme der Vorrichtung zur Speicherung und zur Rückgewinnung von Wärme zirkulieren gelassen, wobei der zweite Druck P2 größer ist als der erste Druck P1, und das zweite Volumen zur Speicherung der Wärme im Inneren des ersten Volumens zur Speicherung der Wärme angeordnet ist.

11. Verfahren nach Anspruch 10, wobei der Schritt b) wiederholt wird, um das Fluid konsekutiv in jedem Volumen (TES1, TES2, TES3) zur Speicherung der Wärme der Vorrichtung zur Speicherung und zur Rückgewinnung von Wärme zirkulieren zu lassen.

12. System zur Speicherung und zur Rückgewinnung von Energie durch Gas, umfassend mindestens zwei Mittel (12) zur Kompression des Gases, mindestens ein Mittel (13) zur Speicherung des komprimiertem Gases, mindestens zwei Mittel (14) zur Entspannung des komprimierten Gases, um eine Energie zu erzeugen, **dadurch gekennzeichnet, dass** das System zur Speicherung und zur Rückgewinnung von Energie eine Vorrichtung (1) zur Speicherung und zur Rückgewinnung von Wärme nach einem der Ansprüche 1 bis 9 umfasst, wobei ein erstes Volumen (TES1) zur Speicherung der Wärme der Vorrichtung zur Speicherung und zur Rückgewinnung von Wärme dazu geeignet ist, das komprimierte Gas zwischen den Mitteln (12) zur Kompression des Gases abzukühlen, und/oder dazu geeignet ist, das Gas zwischen den Mitteln (14) zur Entspannung des Gases zu erhitzen, und ein zweites Volumen (TES2) zur Speicherung der Wärme der Vorrichtung (1) zur Speicherung und zur Rückgewinnung von Wärme, im Inneren des ersten Volumens (TES1) zur Speicherung der Wärme, dazu geeignet ist, das komprimierte Gas zwischen einem Mittel (12) zur Kompression des Gases und dem Mittel (13) zur Speicherung des komprimierten Gases abzukühlen, und/oder dazu geeignet ist, das komprimierte Gas zwischen dem Mittel (13) zur Speicherung des komprimierten Gases und einem ersten Mittel (14) zur Entspannung des Gases zu erhitzen.

13. System nach Anspruch 12, wobei das System zur Speicherung und zur Rückgewinnung von Energie durch komprimiertes Gas mindestens drei Mittel (12) zur Kompression von Gas und mindestens drei Mittel (14) zur Entspannung des Gases umfasst, und die Vorrichtung (1) zur Speicherung und zur Rückgewinnung von Wärme mindestens drei Volumen (TES1, TES2, TES3) zur Speicherung der Wärme umfasst.

14. Verfahren zur Speicherung und zur Rückgewinnung von Energie durch komprimiertes Gas, **dadurch gekennzeichnet, dass** es die folgenden Schritte mittels eines Systems zur Speicherung und zur Rückgewinnung von Energie nach einem der Ansprüche 12 oder 13 umfasst:
a) das Gas wird komprimiert;
b) das komprimierte Gas wird in einem ersten Volumen (TES1) zur Speicherung der Wärme der Vorrichtung (1) zur Speicherung und zur Rückgewinnung von Wärme abgekühlt;
c) das abgekühlte Gas wird komprimiert;
d) das komprimierte Gas wird in einem zweiten Volumen (TES2) zur Speicherung der Wärme der Vorrichtung (1) zur Speicherung und zur Rückgewinnung von Wärme abgekühlt, wobei das zweite Volumen (TES2) zur Speicherung der Wärme im Inneren des ersten Volumens (TES1) zur Speicherung der Wärme angeordnet ist;
e) das abgekühlte Gas wird gespeichert;
f) das gespeicherte Gas wird in dem zweiten Volumen (TES2) zur Speicherung der Wärme erhitzt;
g) das erhitzte Gas wird entspannt, um eine Energie zu erzeugen;
h) das entspannte Gas wird in dem ersten Volumen (TES1) zur Speicherung der Wärme erhitzt; und
i) das erhitzte Gas wird entspannt.

15. Verfahren nach Anspruch 14, wobei die Schritte c) und d) und/oder h) und i) für jedes Mittel (12) zur Kompression des Gases und/oder für jedes Mittel (14) zur Entspannung des Gases wiederholt werden.

## Claims

1. Device for storing and releasing heat comprising at least two heat storage volumes (TES1, TES2, TES3) delimited by concentric walls (2), said heat storage volumes (TES1, TES2, TES3) comprising a heat storage material (3), **characterized in that** the thicknesses of said consecutive walls (2) delimiting said heat storage volumes (TES1, TES2, TES3) decrease from said wall (2) delimiting said central heat storage volume (TES3) to said wall (2) delimiting said peripheral heat storage volume (TES1).

2. Device according to Claim 1, in which said device for storing and releasing heat (1) comprises at least three concentric heat storage volumes (TES1, TES2, TES3).

3. Device according to one of the preceding claims, in which said walls are made of metal, notably of steel.

4. Device according to Claim 3, in which said walls are formed by assembly of at least one wound single-layer or multilayer metal sheet, notably by assembly by welding.

5. Device according to one of Claims 3 and 4, in which said walls are reinforced by at least one circumferential ring (6).

6. Device according to one of the preceding claims, in which said wall (2) delimiting the heat storage volume situated at the periphery (TES1) of said device for storing and releasing heat (1) is covered by an insulating material (4).

7. Device according to one of the preceding claims, in which said heat storage material (3) is formed by concrete balls.

8. Device according to one of the preceding claims, in which said device for storing and releasing heat (1) comprises at least one bar and/or one reinforcing plate (5) disposed between said walls (2).

9. Device according to one of the preceding claims, in which each heat storage volume (TES1, TES2, TES3) is formed by a plurality of modules associated in series and/or in parallel.

10. Method for storing and releasing heat by means of a device for storing and releasing heat (1) according to one of the preceding claims, in which the following steps are carried out:
a) a fluid is made to circulate at a first pressure P1 in a first heat storage volume of said device for storing and releasing heat; and
b) said fluid is made to circulate at a second pressure P2 in a second heat storage volume of said device for storing and releasing heat, said second pressure P2 being greater than said first pressure P1 and said second heat storage volume being situated inside said first heat storage volume.

11. Method according to Claim 10, in which the step b) is reiterated so as to make said fluid circulate consecutively in each heat storage volume (TES1, TES2, TES3) of said device for storing and releasing heat.

12. System for storing and recovering energy by compressed gas comprising at least two compression means (12) for compressing said gas, at least one compressed gas storage means (13), at least two expansion means (14) for expanding said compressed gas to generate an energy, **characterized in that** said system for storing and recovering energy comprises a device for storing and releasing heat (1) according to one of Claims 1 to 9, a first heat storage volume (TES1) of said device for storing and releasing heat being capable of cooling the compressed gas between said gas compression means (12) and/or capable of heating the gas between said gas expansion means (14), and a second heat storage volume (TES2) of said device for storing and releasing heat (1), inside said first heat storage volume (TES1), being capable of cooling the compressed gas between a gas compression means (12) and said compressed gas storage means (13) and/or capable of heating the compressed gas between said compressed gas storage means (13) and a first gas expansion means (14).

13. System according to Claim 12, in which said system for storing and recovering energy by compressed gas comprises at least three gas compression means (12) and at least three gas expansion means (14), and said device for storing and releasing heat (1) comprises at least three heat storage volumes (TES1, TES2, TES3).

14. Method for storing and recovering energy by compressed gas, **characterized in that** it comprises the following steps by means of a system for storing and recovering energy according to one of Claims 12 and 13:
a) a gas is compressed;
b) said compressed gas is cooled in a first heat storage volume (TES1) of said device for storing and releasing heat (1);
c) said cooled gas is compressed;
d) said compressed gas is cooled in a second heat storage volume (TES2) of said device for storing and releasing heat (1), said second heat storage volume (TES2) being situated inside said first heat storage volume (TES1);
e) said cooled gas is stored;
f) said stored gas is heated in said second heat storage volume (TES2);
g) said heated gas is expanded to generate an energy;
h) said expanded gas is heated in said first heat storage volume (TES1); and
i) said heated gas is expanded.

15. Method according to Claim 14, in which the steps c) and d) and/or h) and i) are reiterated for each gas compression means (12) and/or for each gas expansion means (14).
